Europäisches Patentamt

European Patent Office

Office européen des brevets

(19)

(11) Publication number: **0 066 959**
**A1**

# EUROPEAN PATENT APPLICATION

(21) Application number: 82302406.2

(22) Date of filing: 11.05.82

(51) Int. Cl.³: **G 01 V 3/02**

(30) Priority: 15.05.81 US 264200
20.04.82 US 370141

(43) Date of publication of application: 15.12.82
Bulletin 82/50

(84) Designated Contracting States: **AT BE CH DE FR GB IT
LI LU NL SE**

(71) Applicant: **HARCO CORPORATION, 1055 West Smith
Road, Medina Ohio 44256 (US)**

(72) Inventor: **Bushman, James B., 6395 Kennard Road,
Medina Ohio 44256 (US)**
Inventor: **Weldon, Clark B., 1219 Courtland, Houston
Texas 77008 (US)**
Inventor: **Wolfson, Stephen L., 11670 South Lake,
Houston Texas 77077 (US)**

(74) Representative: **Cook, Anthony John et al, D. YOUNG &
CO. 10, Staple Inn, London, WC1V 7RD (GB)**

(54) **Electrical surveys of underwater of underground structures.**

(57) Offshore or onshore electrical surveys of buried or submerged structures such as pipeline (11, 30) are conducted in a fixed-cell-to-moving-cell (28, 20) fashion either before or after one or more established pipe-to-electrolyte potentials are obtained. The results of the fixed-cell-to-moving-cell survey are then corrected by a summation of the fixed-to-moving-cell recorded potential and the established potential at a location of the established potential to obtain a reliable electrical survey of the structure. As indicated, the fixed-cell-to-moving-cell survey may be conducted either before or after the established potential is obtained or either before or after a disposable wire survey using a direct connection to the structure.

-1-

Title:     Electrical Surveys of Underwater or Underground Structures

## DISCLOSURE

This invention relates generally as indicated to electrical surveys of underwater or underground structures.

## BACKGROUND OF THE INVENTION

More particularly this invention relates to certain improvements in surveys of the type disclosed and claimed in prior U.S. Patent No. 4,515,458 to William H. Seager, entitled "Closely Spaced Pipe-to-Soil Electrical Survey, Method and Apparatus", and U.S. Patent No. 4,228,399, to Frank E. Rizzo et al, entitled "Offshore Pipeline Electrical Survey Method and Apparatus". Such prior patents are incorporated herein by reference.

The surveys of such prior patents are used throughout the world and are conducted by Harco Corporation of Medina, Ohio under the servicemark CPL. Such surveys utilize a relatively fine or lightweight wire which is economically disposable. While it is such wire which makes the surveys economically feasible for significant distances, such wire may also cause problems due primarily to its very lightweight nature. Such problems may be caused by line breakage. Offshore, a tuna trawler or other boat may cross the survey causing line breakage. Breakage may also be caused even by fish or rather easily by bad weather. Offshore, when a wire break occurs it is essentially impossible to locate the break and the survey must generally be started over. This can add hours or even days to a survey project which can be very costly if a substantial crew and expensive equipment is involved.

Onshore, breakage may be caused by children playing along the right-of-way, cows, tractors or other vehicles, particularly if the survey crosses a highway. With such breakage the only prior solution was to find the break and repair it or start over. Both expedients cause obvious economic problems particularly if there is a substantial gap caused by the break. Moreover, the wire may break again before the survey can be restarted.

There are also situations during a survey when the surveyor knows a break is about to occur. Therefore, the surveyor may wish to initiate a disconnect. A typical example offshore would be during rough weather or when a vessel is sighted about to cross the path of the survey. If onshore, such situations may exist as the result of obstacles such as highways, railroads, or rivers. It may also occur where the surveyor may wish to initiate the survey the next day from a given location or reference point such as the edge of a field. Accordingly, it would be highly advantageous to be able to conduct surveys as shown in the above patents which can be continued in the event of wire line breakage when accidental or intentional.

It would also be desirable in certain applications to obtain a reliable survey even if only one or perhaps a few established pipe-to-electrolyte potentials are obtainable.

## SUMMARY OF THE INVENTION

It has been discovered that reliable surveys may be provided using a fixed-cell-to-moving-cell survey in combination with a wire line survey or in combination with one or more established structure-to-electrolyte potentials, if the proper readings are correlated and corrected.

With the present invention the survey may be initiated or concluded as in the noted patents. The wire is electrically connected to the structure. Onshore, the wire may be connected to a test station, offshore, the wire may be connected to the structure onshore or to an offshore platform, for example. The wire supply together with a meter, recording or navigational equipment, and a reference electrode is moved along the structure to obtain periodic readings. Onshore, the reference cell is simply placed on the ground along the right-of-way. Offshore, the cell may be towed submerged adjacent the mud line above the structure.

However, when a wire break occurs, either accidentally or intentionally, instead of trying to fix the break, a stationary cell or electrode is positioned at or before the last valid reading obtained or measured in the structure-to-electrolyte survey. The free end of the wire from the supply is then attached to the cell either before or after the cell is positioned, and the survey then proceeds as though no break had occurred. The wire is then connected to the fixed electrode while the moving cell continues along the structure.

-3-

It has also been discovered that for certain applications, such fixed-to-moving-cell surveys may be utilized either before or after (upstream or downstream) obtaining an established pipe-to-electrolyte potential, either by one or more direct electrical connections to obtain a point or points of established potential, or by a survey with a direct electrical connection. In other words, the cell-to-cell survey may be conducted either before or after a direct wire connection survey, or either before or after a single point electrical connection to obtain an established potential, with the cell-to-cell survey results being corrected by a summation of the cell-to-cell results and the established potential at the same location to obtain a reliable electrical survey of the structure.

In many situations where surveys are desired of submerged or buried structures such as pipeline it is not possible to establish a structure-to-electrolyte potential at the desired location. Nor is it necessarily possible to maintain that established potential throughout the course of the desired survey. Thus it has been found that corrected cell-to-cell surveys conducted either before or after (following) the established structure-to-electrolyte potential may be quite useful if the results are properly correlated and corrected.

It will be appreciated that the readings initially obtained in the continuing electrode-to-cell survey will start with zero since the two cells are initially adjacent each other. Continued readings then fluctuate above and below zero. In order to obtain a final potential profile of the structure, calculations must be made to derive the comparable reading from the cell-to-cell potentials obtained. The calculated reading can readily be obtained by adding the last recorded pipe-to-electrolyte reading at the location of the stationary cell to each of the recorded cell-to-cell potentials. The recorded and calculated pipe-to-electrolyte potential measurements can then be plotted against down line distances to obtain a potential profile.

The problem of correlation and correction is particularly acute with regard to offshore submerged structures such as pipelines where the established potential, either as a single point or as a continuing direct connection survey, may not be readily accessible or locatable. In any event the results of the cell-to-cell survey may be corrected by simple summation once the established structure-to-electrolyte potential is obtained. In conducting the survey the cell-to-cell survey may be conducted either before or after the established potential is derived, as long as a point on the cell-to-cell survey can be correlated to the established potential.

It is accordingly a principal object of the present invention to provide certain improvements in electrical surveys utilizing economically disposable lightweight wire which will permit those surveys to continue in spite of accidental or intentional line breakage.

Another principal object of the present invention is the provision of such surveys which may be initiated or concluded utilizing electrical contact with the structure and which may be initiated or concluded without such contact.

A further important object is the provision of such surveys which may be initiated or concluded with a simplified cell-to-cell survey with the results obtained being quickly converted to provide a reliable electrical profile of the structure surveyed.

Another object is the provision of a survey which may be done partly with direct electrical contact with the structure, and partly on a cell-to-cell basis with the readings of the latter being readily computer corrected to assimilate with the former to provide a meaningful graphical electrical profile of the structure being surveyed.

It is also an important object of the present invention to provide a survey of underwater or underground structures such as pipeline which includes at at least some point along the structure a measurement of the pipe-to-electrolyte potential with a direct electrical connection to the structure, the remainder of the survey being a fixed-to-moving-cell survey along the structure, the values obtained thereby being corrected with the pipe-to-electrolyte measurement.

Another important object is the provision of cell-to-cell surveys in conjunction with one or more established structure-to-electrolyte potentials enabling correction to obtain convenient electrical surveys of buried or submerged structures.

Another principal object of the invention is the provision of such surveys which may be initiated without electrical contact to the structure and may be concluded with electrical contact.

A further important object is the provision of such surveys which may be initiated as a cell-to-cell survey and concluded with a single established potential measurement, or vice-versa.

Another important object is the provision of a survey which may be done cell-to-cell and readily computer corrected from an established reading to provide a meaningful graphical electrical profile of the structure being surveyed.

Other objects and advantages of the present invention will become apparent as the following description proceeds.

To the accomplishment of the foregoing and related ends the invention, then, comprises the features hereinafter fully described and particularly pointed out in the claims, the following description and the annexed drawings setting forth in a detail certain illustrative embodiments of the invention, these being indicative, however, of but a few of the various ways in which the principles of the invention may be employed.

BRIEF DESCRIPTION OF THE DRAWINGS

In said annexed drawings:

Fig. 1 is a broken perspective view illustrative of a prior art survey method for surveying buried structures onshore;

Fig. 2 is a similar view of the prior art as utilized for surveying buried or submerged structures offshore;

Fig. 3 is a view similar to Fig. 2 but illustrating the survey continuing in accordance with the present invention after its initiation as in Fig. 1;

Fig. 4 is a view similar to Fig. 3, but illustrating the survey according to the present invention and continuing offshore as initiated in Fig. 2;

Fig. 5 is a graph illustrating the readings obtained with a survey according to the present invention and the corrections made to obtain a structure profile;

Fig. 6 is a partial illustration of a pipe-to-electrolyte potential profile made to obtain comparisons between the actually measured potentials versus the potentials calculated from cell-to-cell potentials;

Fig. 7 is an illustration of a survey conducted in accordance with the present invention of a buried structure such as a submerged pipeline from a submersible such as a submarine obtaining an initial established potential reading and continuing as a cell-to-cell survey;

Fig. 8 is a structure-to-electrolyte potential graph along the structure as seen in Fig. 7 illustrating the results obtained and the corrections;

Fig. 9 is an illustration similar to Fig. 7 but illustrating the submersible conducting initially a cell-to-cell survey to a point of established potential and thereafter correcting the results obtained;

Fig. 10 is a graph similar to Fig. 8 illustrating the results of the survey of Fig. 9;

Fig. 11 is an illustration of a survey of an underwater structure such as a pipeline utilizing a surface vessel to obtain the fixed-to-moving-cell survey and a remotely operated vehicle (ROV) to obtain the established structure-to-electrolyte potential;

Fig. 12 is a graph illustrating the results, and corrections obtained by the established potential of the survey, of Fig. 11;

Fig. 13 is a survey of an onshore buried pipeline initially obtaining a cell-to-cell survey which is thereafter corrected by the established potential; and

Fig. 14 is the graph showing the results before and after the correction obtained by the established structure or pipe-to-electrolyte potential in Fig. 13.

Description of the Prior Art

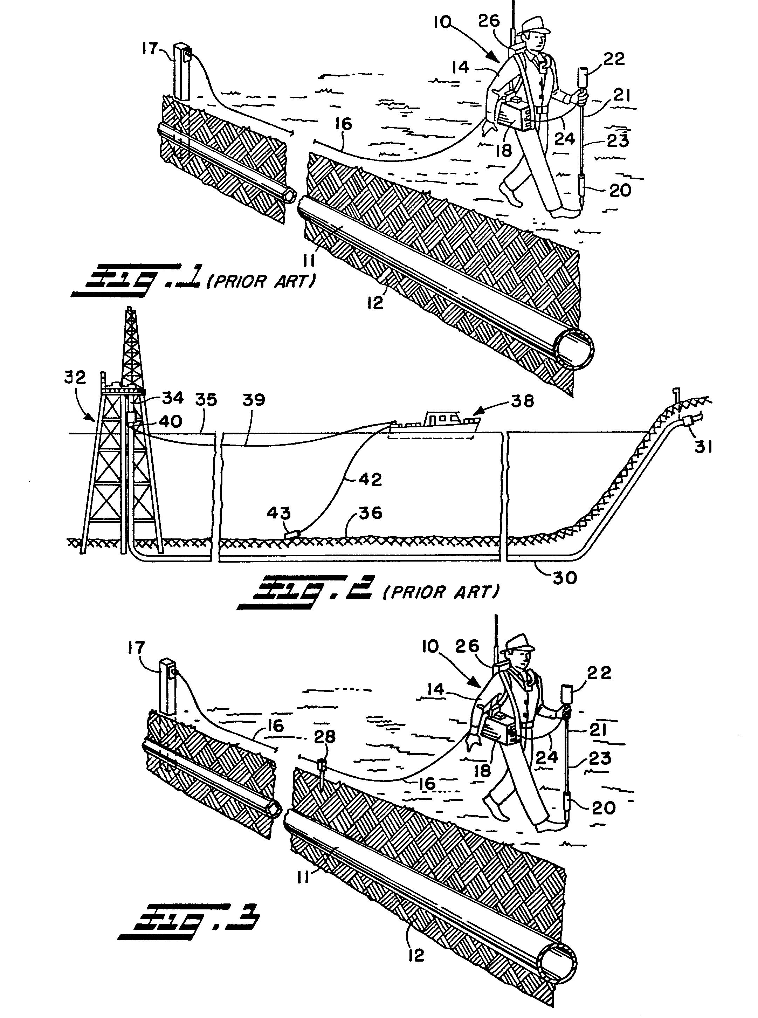

Referring first to Fig. 1, there is illustrated apparatus indicated generally at 10 for practicing a method of making closely spaced pipe-to-soil potential measurements such as shown in prior U.S. Patent 4,151,458. A pipeline or line buried structure 11 is in a soil environment 12 along the right-of-way of which a surveyor 14 is traversing carrying the apparatus 10.

An elongate electrical conductor or wire 16 is electrically and mechanically connected to the pipe 11 at a reference location, preferably a test lead station 17 which is usually one of several installed at locations along the pipe spaced at one to two mile intervals. The connecting wire is of relatively light weight so that it may easily be carried by the surveyor. The wire is stored in unit 18 from which it is played out behind the surveyor 14 as he traverses the ground over the length of the pipeline.

The reference electrode 20, such as a conventional copper-copper sulfate half cell, is used for contacting the soil 12 proximate the pipe, and ideally directly over the pipe. The reference electrode may be mounted on the lower end of a cane 21 held by the surveyor for ease in contacting the ground. A meter 22, preferably a high input resistance type voltmeter, may be provided on the cane and electrically connected to the half cell 20 to measure the potential difference between the wire 16 connected to the pipe and the reference electrode 20. The electrical connection with one terminal of the meter may be provided by a lead 23 on the cane to the reference electrode 20. The other terminal is connected via a lead wire 24 to the unit 18 which lead is electrically connected to the wire 16 through its support spool in the unit 18.

As indicated, the wire 16 may be light weight and economically disposable although it may be retrieved from the right-of-way for salvage or environmental purposes. As the survey progresses, the wire is played out behind the surveyor and at spaced intervals the surveyor may then record the potential difference and location by any of a variety of methods. One such method is to transmit the data by transmitter 26 to a remote system or tape recorder.

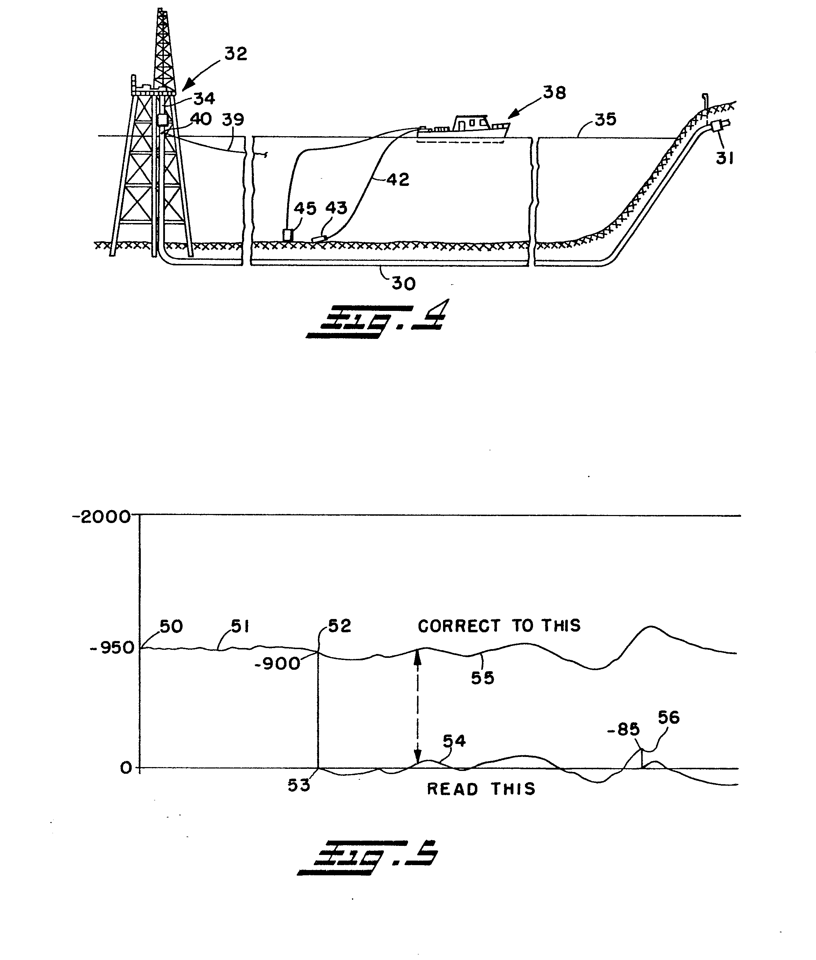

In Fig. 2 there is illustrated a prior art offshore survey which includes a buried structure or pipeline 30 extending, for example, from an onshore connection 31 to an offshore platform 32. The pipeline may serve as part of a gathering system for offshore wells, one or more of which may be positioned on several platforms in the area. The pipe includes a riser 34 extending above the sea surface 35. The pipe 30 may be buried just below the mud line 36 on the sea bottom, or it may be laid directly on top of the bottom.

The survey is conducted from a boat 38 or similar vessel and includes a lightweight economically disposable wire 39 which is electrically connected to the riser 34 at 40. The wire may be connected to the riser through a heavier lead, for example, since there is usually heavier wave action or vessel activity around the platform. The boat 38 includes the reels of wire, the meter and other equipment for navigational and communication purposes. The wire 39 may be similar to the wire 16 but of somewhat heavier gauge and provided with a special coating to minimize holidays. The wire is connected through the reel on the vessel 38 to the meter and from the meter to line 42 which is electrically connected to cell 43. The cell or electrode 43 may be a conventional silver-silver chloride half cell which is weighted to pass proximate the pipeline 30.

The survey is conducted by first locating the pipe. This may be done by various navigational aids. Since submerged pipelines tend to move, it may be preferred that the pipeline first be located such as with the use of a marine magnetometer or other pipe locating device. A magnetometer sensor may be towed across the pipeline at certain intervals and then markers may be placed laterally offset from the points where the magnetometer indicates the pipeline to be, thus making it possible for the survey vessel to track the line. As the vessel 38 proceeds along the track the wire 39 is played out behind the vessel and the potential readings are taken and recorded periodically. The spacing of the readings may, of course, vary. Onshore, the readings may be taken every two and one-half feet, for example, while offshore, typically the readings may be taken every hundred feet. In either event, considering the length of the survey, the readings would be considered closely spaced.

Reference may be had also to U.S. Patent 4,322,805 indicating certain survey techniques and improvements with which the present invention may be utilized.

DESCRIPTION OF THE PREFERRED EMBODIMENTS

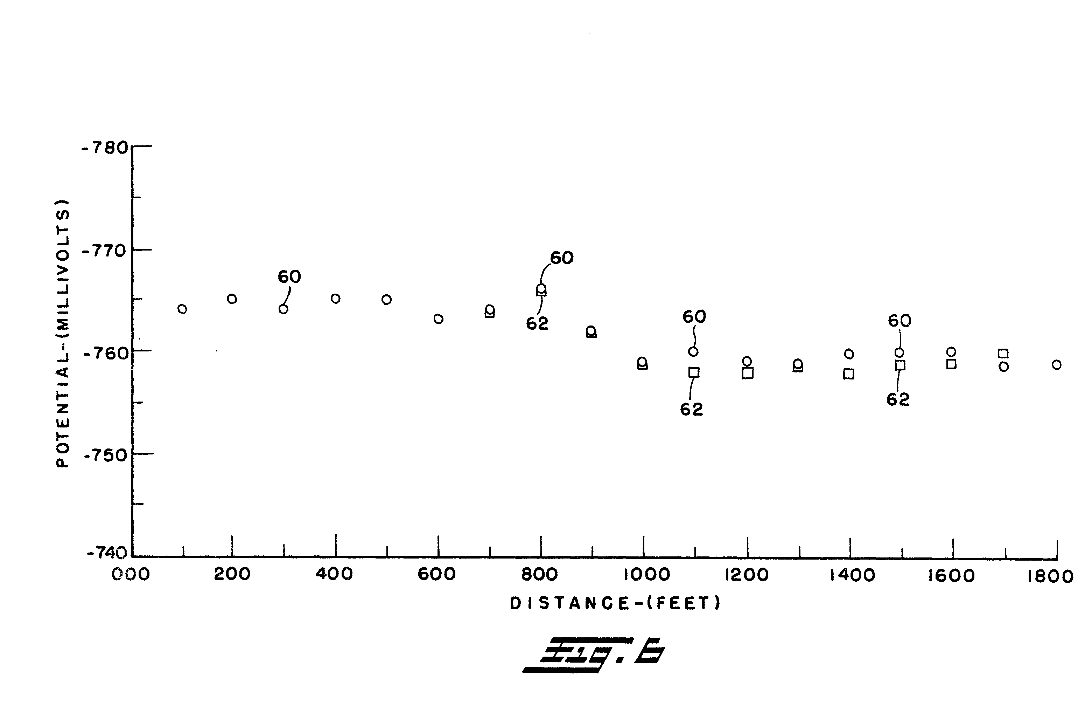

Referring now to Fig. 3, in the event breakage of the wire 16 occurs, either accidentally or intentionally, for any of the aforementioned reasons, the surveyor 14 returns to or before the position of his last valid

-9-

reading with the direct wire connection and places in the ground stationary electrode 28. Since it may not be readily apparent to the surveyor from the readings obtained precisely when the wire break occurred, the surveyor may wish to back-track several locations to select a location to ensure the stationary electrode is at a location where a valid reading was obtained.

The electrode 28 may be copper-copper sulfate as the electrode 20, or a silver-silver chloride electrode, for example. It may include an angle, step or other structural feature enabling the surveyor to quickly and conveniently drive it into the ground with the aid of his foot, and the broken or disconnected free end of the wire 16 extending from the reel carried in the unit 18 may readily be connected thereto. The survey then continues. The electrode 28 may also be economically disposable as is the wire and need not necessarily be retrieved.

Should the wire 16 break again, either intentionally or accidentally, a further electrode 28 may be implanted in the right-of-way at the last valid reading obtained, the free end of the wire from the spool again connected thereto. This process may be repeated several times if required.

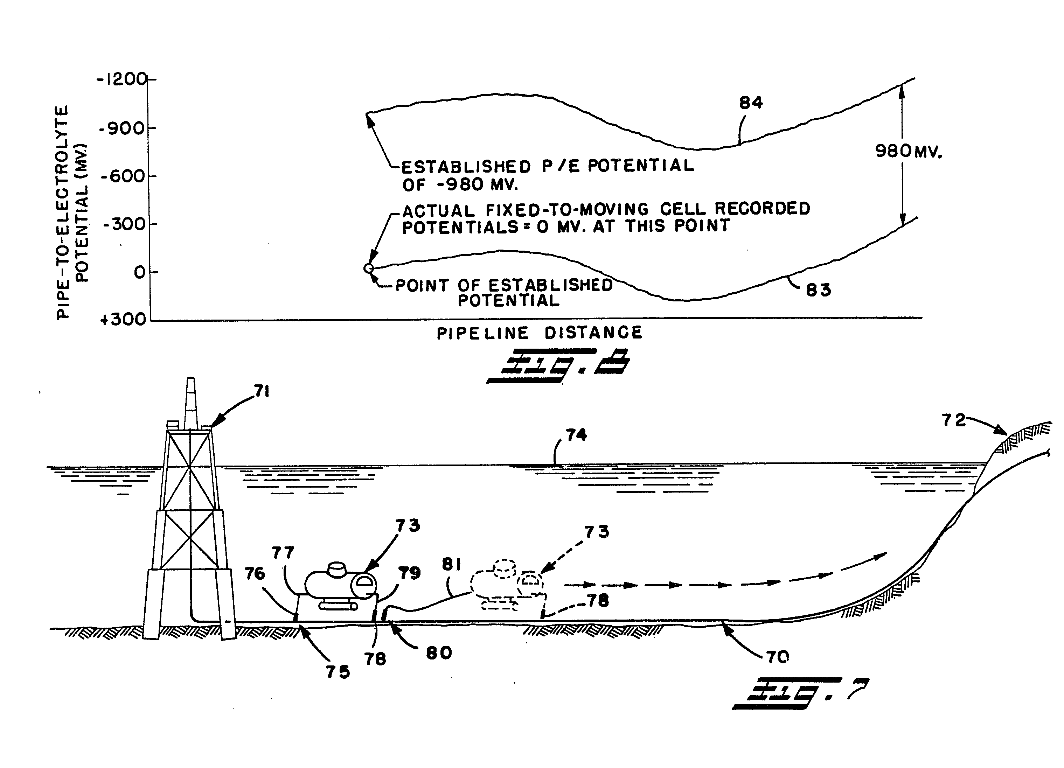

Referring now to Fig. 4, if offshore a wire breakage occurs either accidentally or intentionally, the free end of the wire 39 from the spool or reel on the vessel 38 is connected to a weighted cell or electrode 45 which is dropped at or before approximately the last position where a valid recorded reading is obtained with the direct connection. The survey then continues as a cell-to-cell survey.

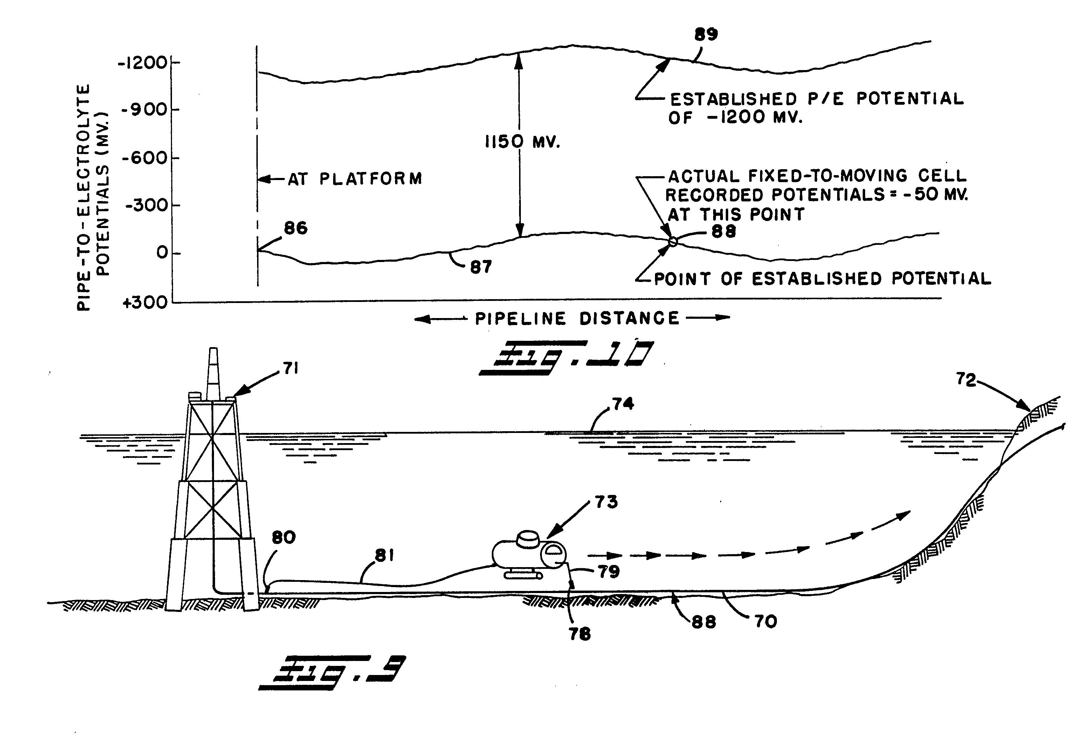

Referring now to Fig. 5, as soon as the wire is attached to the stationary cell 28 or 45, with the moving and stationary cells adjacent each other, the reading obtained would be zero. As the cell-to-cell continues, the readings then fluctuate above and below zero. Accordingly, a correction is required to provide a meaningful pipe-to-electrolyte potential profile.

As seen in Fig. 5, the abscissa of the graph represents the distance along the survey while the ordinate represents the measured or calculated potential in millivolts. The survey may start at the point 50 and the actual measured pipe-to-electrolyte potentials may fluctuate along the curve 51 to the point 52 at which wire breakage occurs. At such point, for example, the measured potential may be -900 millivolts. Thereupon a stationary electrode is located and the survey continues with the cell-to-cell survey providing the potential readings indicated by the curve 54. As indicated the curve fluctuates above and below zero. Therefore, in order to provide a meaningful continuation of the curve 51, a correction is required, and to each reading obtained beyond the point 53 the correction is simply the summing of the direct measured reading obtained at the point 52, namely, -900 millivolts. In this manner, the corrected curve is shown beyond the point 52 at 55.

If wire breakage occurs again in the cell-to-cell survey, a further stationary electrode may be positioned along the survey and the summation or correction applied is thereafter the sum of the reading shown at 56 and the original reading shown at 52. Assuming the reading at 56 is -85 millivolts, as indicated, the summing correction would be -985 millivolts.

It will be appreciated that during the survey the readings may be obtained without the corrections or calculations being applied, notations simply being made concrning the amount of correction required and where the correction is required. Other notations can be made along the survey such as with reference to locations, markers or other physical conditions. After the notations are recorded, the notations may be computer corrected to provide a meaningful pipe-to-electrolyte potential profile of the pipeline.

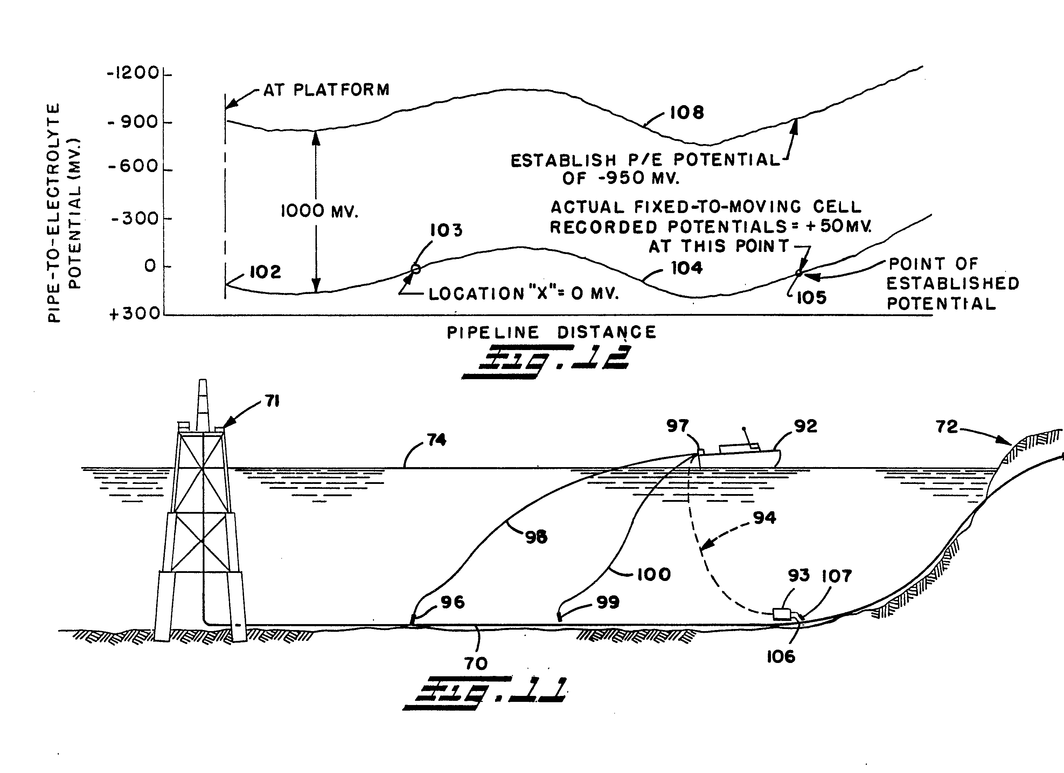

Specific Example - Fig. 6

With reference to Fig. 6, the ordinate again is expressed in potential measurements or negative millivolts while the abscissa is expressed in distance or feet. The test represented by the graph of Fig. 6 was conducted to compare direct measured potentials versus those potentials calculated from a continuing cell-to-cell survey in accordance with the present invention.

The survey was performed utilizing the Harco CPL survey method while simultaneously performing a stationary-cell-to-moving-cell potential survey in accordance with the present invention. The test was conducted on an offshore pipeline and a silver-silver chloride reference electrode was towed above the pipe while maintaining the test connection to the pipe by spooling out the economically disposable wire from a boat moving at approximately two knots. The pipe-to-electrolyte potential was measured using a high impedance voltmeter (10 meg. ohm) and was recorded at 100 ft. intervals along the entire length of the pipeline. The measurements were made with the test leads to the pipe connected to the negative terminal of the voltmeter and with the reference electrode connected to the positive terminal of the voltmeter.

The stationary-cell-to-moving-cell potential survey was performed simultaneously with the pipe-to-electrolyte survey except for the initial 700 feet of the pipeline. After the survey had progressed approximately 700 feet down the line, the survey vessel was stopped and a silver-silver chloride reference electrode was installed at the mud line near the pipeline. The lead to this reference electrode was spliced to another spool of such economically disposable wire which was in turn electrically connected to the negative terminal of a high impedance voltmeter (10 meg. ohm). The positive terminal of the voltmeter was connected to the reference electrode being used for the pipe-to-electrolyte potential measurement. Thus, the moving or towed electrode was common to both the pipe-to-electrolyte potential measurement and the electrode-to-electrode potential measurement. Both measurements were recorded at the point where the stationary electrode was installed. Both electrode-to-electrode and pipe-to-electrolyte measurements were recorded simultaneously at 100 ft. intervals along the pipeline.

The pipeline was located prior to the survey moving a marine magnetometer across the pipeline with markers offset from the points where the magnetometer indicated the pipeline to be, thus permitting the vessel to track the line.

The pipe-to-electrolyte potential values are shown at 60 as circular dots in Fig. 6, while the pipe-to-electrolyte values calculated from the electrode-to-electrode potential measurements are shown at 62 as square dots. In order to calculate the pipe-to-electrolyte potentials from electrode-to-electrode potentials, the following simple formula was used:

$$P/E_{cx} = P/E_{ro} + E/E_{rx}$$

Where $P/E_{cx}$ is the calculated pipe-to-electrolyte at a downline distance of "x", $P/E_{ro}$ is the recorded pipe-to-electrolyte at the origination point of the E/E potential run which in the indicated graph of Fig. 6 is 700 feet downline, and the $E/E_{rx}$ is the recorded electrode-to-electrode potential at downline distance "x". The recorded and calculated pipe-to-electrolyte potential measurements are plotted with the downline distances.

Although Fig. 6 indicates only partially the data obtained, an examination of the data presented in one of the two runs of the test survey indicates that of 105 points where both P/E (pipe-to-electrolyte) and E/E (cell-to-cell) potentials were recorded that the following correlation existed between recorded and calculated potential values: 37% of all calculated values were the same as the recorded value, 80% of all calculated values were within plus or minus 1 millivolt of the recorded value, 91% of all calculated values were within plus or minus 2 millivolts of the recorded value; 97% of all calculated values were within plus or minus 3 millivolts of the recorded value; and 100% of all calculated values were within plus or minus 4 millivolts of the recorded value. A study of the second run also showed excellent correlation between the calculated and recorded pipe-to-electrolyte potential values. In the second run 60% of the calculated potential values were within 1 millivolt of the recorded potential, 89% were within 2 millivolts and 100% were within 4 millivolts of the recorded value.

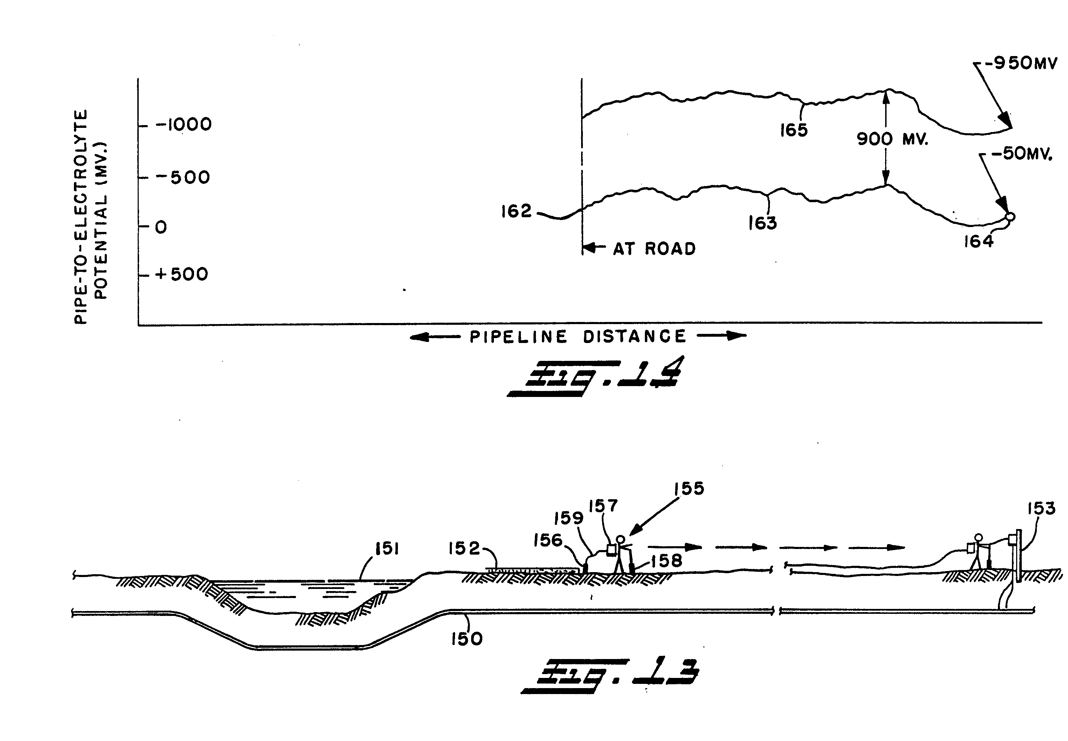

Referring now to Fig. 7 and the associated graph Fig. 8, it will be seen that there is illustrated a submerged pipeline 70 which may extend, for example, from an offshore platform 71 to some location onshore 72. Such Fig. 7 illustrates a fixed-electrode-to-moving-electrode survey accomplished by a submersible such as a submarine on either a buried or exposed subsea pipeline 70. The submarine, shown at 73, descends to the bottom of the lake, sea or ocean 74 and makes an electrical contact with the pipeline 70 at a convenient location 75 using a pointed metallic tipped device or an electrical probe, sometimes termed a stabber, as indicated at 76. The probe 76 is connected through a wire 77 to an instrumentation package onboard the submarine, which includes a high impedance voltmeter. Reference may be had to Rog et al U.S. Patent No. 4,322,805, issued March 30, 1982, for a more detailed description of what the instrumentation package may contain. A reference electrode 78 which may be manipulated by the submarine and which is also connected to the instrumentation package through wire 79 is positioned adjacent to the pipeline 70 to establish a pipe-to-electrolyte potential between the existing pipeline and the reference electrode 78 at the point illustrated which on the graph of Fig. 8 becomes the point of established potential.

The submarine then deploys a fixed disposable reference electrode seen at 80 at the same reference position or point of established potential and then proceeds down the pipeline maintaining contact to the fixed electrode 80 through economically disposable wire 81, also connected to the instrumentation package which may be played out from the submarine as the submarine moves along the pipeline. In this manner the submarine measures the voltage differences either continuously or at closely spaced intervals between the deployed fixed electrode 80 and the moving electrode 78, also connected to the instrumentation package.

Referring now to the graph of Fig. 8 there is illustrated the pipe-to-electrolyte potential expressed in millivolts plotted along the pipeline distance. As indicated in Fig. 8, the initially measured pipe-to-electrolyte potential is, for example, -980 millivolts at the point of established potential. The fixed-to-moving reference electrode at this starting point, when the cells 78 and 80 are adjacent each other, has a voltage difference of zero millivolts. As the submarine travels down the pipeline, the variations in voltage measured between the moving cell 78 and the fixed cell 80 are regularly or continuously measured. As expected, the actual fixed-to-moving-cell recorded potentials commence at the zero millivolt level and fluctuate slightly above and below the zero value producing the curve shown generally at 83. At any given or X distance down the pipe, the potential measurement between the moving cell and fixed cell may simply be upgraded by the originally established potential at the point of established potential by the direct wire contact utilizing the probe 76. Thus, if at a given distance, a potential measurement between the moving cell and the fixed cell is -50 millivolts, the pipe-to-electrolyte potential that would exist at this point would be -930 millivolts. In other words, all of the moving-reference-electrode-to-fixed-reference-electrode measurements may be upgraded by the originally established pipe-to-electrolyte potential of (-980) millivolts to produce the pipe-to-electrolyte potential profile seen at 84 in Fig. 8. Such a profile has been found to be quite reliable where continuous direct wire contact surveys may not be practical.

Referring now to Figs. 9 and 10, there is illustrated essentially the same type of survey with the exception that the submarine 73 may be prevented from establishing the initial pipe-to-electrolyte potential. For example, the pipe may be buried adjacent the platform or may be too well coated to make the metallic contact to the pipe necessary initially to establish a pipe-to-electrolyte potential. The survey nevertheless may begin at a point adjacent the platform simply by dropping a fixed disposable or recoverable cell 80 at the noted point adjacent the platform and merely commencing to record the moving-to-fixed reference electrode potentials as the submarine moves along the pipeline. The wire 81 is preferably of the economically disposable type which may be played out behind the submarine with both cells 78 and 80 connected through the instrumentation package which includes a high impedance voltmeter.

The fixed-to-moving-cell recorded potential may commence at the initial location shown at 86 at the noted zero value obtained when the two cells are adjacent each other and continuous or periodic readings obtain the values 87 as the submarine moves along the pipeline. The survey plotting the values 87 in a cell-to-cell fashion continues along the pipeline to some given or X distance down the pipeline such as indicated at 88 where the submarine can actually measure the pipe-to-electrolyte potential. Such measurement may be obtained in essentially the same manner as in Fig. 7 utilizing a metallic probe. In this example, as seen by the graph of Fig. 10, the pipe-to-electrolyte potential measurement at the distance X down the pipeline was found to be (-1200) millivolts. At this same point or location X it was observed that the fixed-to-moving-cell potential was -50 millivolts. Thus all other cell-to-cell potentials may be corrected by -1150 millivolts (1200 minus 50). It should be noted that the survey may continue in the cell-to-cell fashion beyond the location 88 which is then simply a repeat of the survey of Fig. 7 after the established potential is obtained. As indicated from Fig. 10, the corrected readings utilizing the factor of 1150 millivolts may be shown by the plot 89 which provides a reliable pipe-to-electrolyte potential for the course of the survey.

Referring now to Figs. 11 and 12, there is illustrated a survey which may be made by a surface vessel 92 in association with a Remote Operated Vehicle 93 (hereinafter referred to as an ROV), which may be connected to the vessel by an umbilical cord 94. The ROV 93 in this embodiment would normally only be used to determine an established pipe-to-electrolyte potential at one or more convenient locations along the pipeline. The fixed-cell-to-moving-cell survey may be conducted utilizing a fixed cell 96 which may or may not be economically disposable connected to the instrumentation package 97 on the vessel 92 through economically disposable wire 98 played out from the vessel. The moving cell 99 is connected through wire 100 also to the instrumentation package 97. The reference cell 99 which is towed from the vessel may be positioned adjacent the pipe utilizing a convenient sail or fish. Once the fixed cell 96 is in position the survey may commence near the platform 71 as indicated by the position 102 in Fig. 12. As the towed reference cell 99 passes the fixed cell 96 the value at that location will be zero as indicated at 103. The survey continues along the pipeline establishing the fixed-to-moving-cell recorded potential seen by the curve 104. The survey continues until it arrives at a position along the pipeline where the ROV 93 may be launched to measure an established pipe-to-electrolyte potential. This may be at the point 105. The ROV may utilize a probe 106 and cell 107 to obtain such established potential. As an example, the established potential may be -950 millivolts at the location 105 where the moving-reference-electrode-potential measured with respect to the fixed-reference-electrode is determined to be +50 millivolts. Thus by addition all of the values of the profile 104 may be corrected by a factor of 1000 millivolts. The corrected profile 108 seen in Fig. 12 provides a reliable established pipe-to-electrolyte potential for the course of the survey.

It will be appreciated that instead of using an ROV to establish a correct potential at any single or multiplicity of points along the survey, a diver, swimmer, or permanently installed measuring unit which may transmit the pipe-to-electrolyte potential to the surface vessel 32 may be employed.

Referring now to Fig. 13 there is illustrated a survey generally similar to that shown in Figs. 9 and 11, but conducted on buried onshore pipeline 150. As indicated, the pipeline 150 may extend beneath a river or stream 151, a road 152 and extend beyond beneath its right of way. Test station 153 is provided which may be some considerable distance such as several miles or kilometers from the road 152. To conduct a survey from the road to the test station where the pipe-to-electrolyte potential may be established, the surveyor, shown generally at 155 places a fixed cell 156 at the location indicated adjacent the road. The surveyor 155 may be equipped as in Rog et al U.S. Patent 4,322,805 and carries the instrumentation package 157 which includes the high impedance voltmeter. The surveyor 155 may also carry one or more pole mounted movable cells shown at 158, also electrically connected to the instrumentation package 157. It will be appreciated that the fixed cell is connected to the instrumentation package through a supply of economically disposable wire 159 which the surveyor plays out as he or she moves along the pipeline right of way.

As seen in Fig. 14, initially the moving cell 158 will be placed adjacent the fixed cell 156 to obtain the initial zero reading seen at 162. The surveyor continues down the right of way taking closely spaced readings generating the profile shown at 163, which, as indicated, fluctuates above and below zero. When the surveyor reaches the test station or location where the established potential may be obtained, the reading is seen to be minus 50 millivolts, for example. Since the test station represents a convenient direct electrical connection to the buried structure or pipeline 150, the established pipe-to-electrolyte potential may readily be established at the location 164 and is found to be, for example, minus 950 millivolts. By subtraction, the correction factor of minus 900 millivolts is readily obtained which permits the profile 165 readily to be generated by computer or otherwise. Profile 165 provides a highly reliable pipe-to-electrolyte profile of the pipeline survey. The survey may continue from test station 153 either as a direct wire connection or again as a fixed-to-moving, or cell-to-cell survey. In any event, it will be seen that applicant's fixed-to-moving-cell survey is applicable both onshore and offshore.

It should be noted that a hard wire connection for offshore applications as indicated in applicants' prior copending application at either the platform or at shore may still be employed. A fixed-cell-to-moving-cell survey may be made as long as one or more pipe-to-electrolyte potentials may be measured along the pipeline length to be surveyed. It should also be noted that the established pipe-to-electrolyte potential may be obtained either before the survey, after the survey, or at any time during the survey.

Although the invention has been shown and described with respect to the preferred embodiments, it is obvious that equivalent alterations and modifications will occur to others skilled in the art upon the reading and understanding of this specification. The present invention includes all such equivalent alterations and modifications, and is limited only by the scope of the claims.

The embodiments of the invention in which an exclusive property or privilege is claimed are defined as follows:

1. A survey of underwater or underground structures such as pipelines includes at, at least some point along the structure, a measurement of the structure-to-electrolyte potential with an electrical connection to the structure, the remainder of the survey being a fixed-cell-to-moving-cell survey along the structure, the values obtained thereby being corrected with the structure-to-electrolyte measurement.

2. A survey as set forth in claim 1 wherein the fixed-cell-to-moving-cell survey is conducted utilizing economically disposable wire.

3. A survey as set forth in claim 2 wherein the measurement of the structure-to-electrolyte potential is obtained before the fixed-cell-to-moving-cell survey.

4. A survey as set forth in claim 2 wherein the measurement of the structure-to-electrolyte potential is obtained after the fixed-cell-to-moving-cell survey.

5. A survey as set forth in claim 2 wherein the measurement of the structure-to-electrolyte potential is obtained during the fixed-cell-to-moving-cell survey.

6. A survey as set forth in claim 2 wherein the structure is an underwater pipeline, and the measurement of the pipe-to-electrolyte potential is obtained from a submersible.

7. A survey as set forth in claim 6 wherein the fixed-cell-to-moving-cell survey is also obtained from a submersible.

8. A survey as set forth in claim 6 wherein the fixed-cell-to-moving-cell survey is obtained from a surface vessel.

9. A survey as set forth in claim 8 wherein the pipe-to-electrolyte potential is obtained from a remotely operated vehicle connected to the surface vessel by an umbilical cord.

10. A survey as set forth in claim 2 wherein the structure is an underwater pipeline, and the fixed-cell-to-moving-cell survey is obtained from a surface vessel.

11. A survey as set forth in claim 2 wherein the fixed cell is also economically disposable.

0066959

1/7

Fig.1 (PRIOR ART)

Fig.2 (PRIOR ART)

Fig.3

_Fig.4_

_Fig.5_

Fig. 6

**PIPE-TO-ELECTROLYTE POTENTIAL (MV.)**

-1200
-900
-600
-300
0
+300

ESTABLISHED P/E POTENTIAL OF -980 MV.

ACTUAL FIXED-TO-MOVING CELL RECORDED POTENTIALS = 0 MV. AT THIS POINT

POINT OF ESTABLISHED POTENTIAL

84

83

980 MV.

PIPELINE DISTANCE

_Fig. 8_

_Fig. 7_

71  72  74  73  77  76  75  78  79  80  81  70

4/7

0066959

PIPE-TO-ELECTROLYTE POTENTIALS (MV.)

-1200
-900
-600
-300
0
+300

89

ESTABLISHED P/E POTENTIAL OF -1200 MV.

1150 MV.

AT PLATFORM

ACTUAL FIXED-TO-MOVING CELL RECORDED POTENTIALS = -50 MV. AT THIS POINT

86

87

88

POINT OF ESTABLISHED POTENTIAL

PIPELINE DISTANCE

*Fig. 10*

71

74

72

73

80

81

79

78

88

70

*Fig. 9*

0066959

PIPE-TO-ELECTROLYTE POTENTIAL (MV.)

-1200

-900

-600

-300

0

+300

AT PLATFORM

108

ESTABLISH P/E POTENTIAL OF -950 MV.

1000 MV.

ACTUAL FIXED-TO-MOVING CELL RECORDED POTENTIALS = +50MV. AT THIS POINT

103

102

104

LOCATION "X" = 0 MV.

105

POINT OF ESTABLISHED POTENTIAL

PIPELINE DISTANCE

*Fig. 12*

71

97

92

72

74

98

94

100

93  107

96

99

70

106

*Fig. 11*

0066959

FIG.14

FIG.13

PIPE-TO-ELECTROLYTE POTENTIAL (MV.)

-1000

-500

0

+500

-950MV

-50MV.

900 MV.

164

165

163

162

AT ROAD

← PIPELINE DISTANCE →

153

155

158

157

159

156

152

151

150

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | FR-A-2 355 285 (COPRELEC) * page 5, line 7 - page 7, line 19; figures 1-3 * | 1,2 | G 01 V 3/02 |
| Y | US-A-4 063 161 (R. PARDIS) * column 6, line 24 - column 7, line 9; figures 2-5 * | 1 | |
| Y | US-A-3 999 121 (J. TAYLOR) * column 3, line 18 - column 4, line 17; figure 1 * | 1 | |
| Y | US-A-3 526 831 (D. SMITH) * column 3, line 44 - column 4, line 23; figure 1 * | 1,6,7 | |
| D,Y | US-A-4 151 458 (W. SEAGER) * column 6, line 51 - column 7, line 5; figure 1 * | 1,2 | TECHNICAL FIELDS SEARCHED (Int. Cl. 3) |
| D,P | US-A-4 322 805 (J. ROG et al.) * abstract; figure 1 * | 1,2 | G 01 V 3/02 G 01 V 3/08 G 01 V 3/26 G 01 R 31/08 G 01 R 31/02 |
| A | US-A-4 078 510 (J. MORGAN) * column 2, line 39 - column 3, line 21; figures 1,4 * | 1,8-10 | |
| A | GB-A- 188 676 (A. IONIDES) * page 1, lines 62-78; figure 1 * | 1,6,7 | |

-/-

The present search report has been drawn up for all claims

| Place of search | Date of completion of the search | Examiner |
|---|---|---|
| THE HAGUE | 10-09-1982 | GALLO G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

European Patent
Office

**EUROPEAN SEARCH REPORT**

0066959
Application number

EP 82 30 2406

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 792 350 (F. BOSSLER) <br> * column 2, lines 50-62; figure 2 * | 1 | |
| A | DE-B-1 009 723 (SEISMOS GmbH) <br> * column 4, lines 5-46; figures 1,2 * | 1 | |

TECHNICAL FIELDS
SEARCHED (Int. Cl. ³)

The present search report has been drawn up for all claims

| Place of search | Date of completion of the search | Examiner |
|---|---|---|
| THE HAGUE | 10-09-1982 | GALLO G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82